# EUROPÄISCHE PATENTSCHRIFT

(11) **EP 0 846 236 B1**
(45) Veröffentlichungstag und Bekanntmachung des Hinweises auf die Patenterteilung: **01.02.2006**
(21) Anmeldenummer: 97929248.9
(22) Anmeldetag: 21.06.1997
(51) Int. Cl.: F16J 15/32

(54) **WELLENDICHTUNG UND VERFAHREN ZU IHRER HERSTELLUNG**
SHAFT SEAL AND METHOD OF MANUFACTURING IT
JOINT D'ARBRE ET SON PROCEDE DE PRODUCTION

(30) Priorität: 22.06.1996 DE 19625011
(43) Veröffentlichungstag der Anmeldung: 10.06.1998
(73) Patentinhaber: TRW Fahrwerksysteme GmbH & Co. KG, 40547 Düsseldorf (DE)
(72) Erfinder: GERIGK, Hans-Willi, D-46145 Oberhausen (DE)
(74) Vertreter: Stenger, Watzke & Ring
(86) Internationale Anmeldenummer: PCT/EP1997/003260
(87) Internationale Veröffentlichungsnummer: WO 1997/049940

(56) Entgegenhaltungen:
- DE-A- 3 830 706
- US-A- 3 183 009
- US-A- 3 927 600
- US-A- 4 387 902

## Beschreibung

Die Erfindung betrifft eine Wellendichtung, insbesondere für Wellen eines hydraulischen Lenkventils, mit einem eine abzudichtende Welle umgebenden Dichtringbereich, wenigstens einem wellenseitig daran angeordneten Dichtkantenprofil zum dichtenden Kontaktieren der Welle im Bereich einer eine radiale und in Bezug auf eine Längsmittelachse der Welle quertiegende Ebene definierenden ringförmigen Dichtlinie und am Dichtkantenprofil angrenzenden zylindrischen Bereichen, wobei das Dichtkantenprofil eine die ringförmige Dichtlinie mehrfach schneidende Kontur hat und über den gesamten Umfang beidseitig gleichbleibende Winkel aufweist.

Gattungsgemäße Wellendichtungen der beschriebenen Art sind an sich bekannt. Sie werden unter anderem bevorzugt in hydraulischen Lenkventilen eingesetzt. Hydraulische Lenkventile, beispielsweise Drehschieberventile, sind an sich bekannt. In einem Gehäuse sind eine Eingangswelle und eine mit dieser über ein drehelastisches Element, üblicherweise einen Torsionsstab, verbundene Ausgangswelle angeordnet. Die Ausgangswelle ist über ein Ritzel mit der Zahnstange eines Lenkgetriebes im Eingriff. Mit der Ausgangswelle verbunden ist üblicherweise eine die Eingangswelle umgebende Ventilhülse. Über Steuerbohrungen wird über gehäuseseitige Anschlüsse zugeführtes Hydrauliköl entsprechenden Steuerkanälen zugeführt.

Bei derartigen Servolenkventilen werden Wellendichtungen der beschriebenen Art eingesetzt. Diese umfassen üblicherweise einen äußeren Dichtringbereich, welcher so ausgestattet ist, daß die Wellendichtung relativ zur Welle im Gehäuse oder einem sonstigen Bauelement fixiert werden kann. Üblicherweise besteht der Dichtringbereich aus einem elastischen Material mit einer verstärkenden ringförmigen Einbettung, die auch federelastisch sein kann. Üblicherweise einstückig mit dem elastischen Material ausgebildet ist an dem Dichtringbereich zur Welle hinweisend wenigstens ein Dichtkantenprofil angeordnet. Dieses bildet praktisch einen die Welle umgebenden Ring und hat meistens in Axialrichtung nur eine sehr geringe Ausdehnung, ist also stegförmig. Üblicherweise tritt systembedingt keine Schleppströmung zur Dichtkante hin auf und somit auch nicht in die Dichtfläche hinein. Die Dichtfläche ist eine imaginäre ringförmige Fläche auf der Außenkontur einer Welle, in welcher das Dichtkantenprofil die Welle dichtend kontaktiert. Mangels Schleppströmung kann es insbesondere bei schnell rotierender Wellen zu einer mangelnden Schmierung der Dichtfläche kommen, wodurch die mechanische und thermische Beanspruchung stark ansteigt, unter anderem auch deshalb, weil kein Fluidaustausch in der Dichtfläche bzw. einem Dichtspalt stattfindet. Üblicherweise liegt die Dichtkante in einer zur Wellenachse senkrechten Ebene. Schmierungen beruhen hier auf komplizierten Strömungsvorgängen, die durch ein Zusammenwirken von mikroskopischen Rauhheitserhebungen mit dem viskoelastischen Dichtungswerkstoff entstehen. Zur Verbesserung der Schmierung bei schmierungstechnisch ungünstigen Strömungsverhältnissen bei rotierenden Wellen wurde bereits vorgeschlagen, einen O-Ring schräg zur Wellenachse anzuordnen. Die Verwendung eines schräg zur Wellenachse liegenden O-Ringes erzeugt eine zusätzliche Reibung und läßt auch keine Toleranzen zu, das heißt, eine Exzentrizitätskompensation kann nicht stattfinden. Bei schnell drehenden Wellen schwimmen die Dichtungen auf und es kommt über die sogenannte hydrodynamische Reibung zu einer Schmierwirkung. Dies tritt jedoch bei langsamen Wellen, wie sie beispielsweise in Servolenksystemen eingesetzt werden, nicht auf.

Charakteristisch für die Lenkventilanwendung ist die wegen langsamer Drehgeschwindigkeiten und fehlender Schleppströmung in den Kontaktbereich von Welle und Dichtung auftretende Mangelschmierung zwischen Welle und Dichtung, wodurch unerwünscht hohe Reibung und hieraus resultierende Stick-Slip-Erscheinungen bis hin zur Geräuschbildung entstehen können.

Aus der DE 22 64 042 A1 ist eine Wellendichtung für schnellaufende Wellen bekannt. Diese wird so hergestellt, daß die sinuswellenförmig ausgebildete Dichtkante bei der Herstellung des aus elastischem Material bestehenden Dichtungsteiles ausgebildet wird. Da die Dichtkante sinuswellenartig axial wandert und die Dichtkante einen konstanten Durchmesser zwecks Herstellung konstanter Anpreßverhältnisse haben sollte, verändern sich die beidseitigen Winkel des Dichtkantenelementes ständig, wodurch der Dichtmechanismus, der wesentlich von beiden Winkeln bestimmt wird, unerwünscht beeinflußt wird. Aus der DE 38 30 706 A1 ist ebenfalls eine Wellendichtung für schnellaufende Wellen bekannt. Hier wird das Dichtkantenprofit unter Erzeugung eines konstanten Durchmessers ebenfalls in Axialrichtung sinuswellenartig verlaufend ausgebildet, wobei jedoch die beidseitigen Dichtkantenwinkel über den gesamten Umfang konstant gehalten werden. Die Dichtkante hat eine geringe Höhe und auf beiden Seiten der Dichtkante werden kapillaraktive Freiräume gebildet, die zur Aufrechterhaltung einer ausreichenden Schmierung des für schnellaufende Wellen vorgesehenen Diehtungselementes verwendet werden. Während einerseits konstante Diehtkantenwinkel auf beiden Seiten für gattungsgemäße Wellendichtungen für eine definierte Dichtungscharakteristik erforderlich sind, sind die kapillaraktiven Freiräume beidseitig der Dichtkante bei der Druckabdichtung langsam laufender Wellen, insbesondere bei den Wellen von Lenkgetrieben, nachteilig, da im Gegensatz zur Anwendung bei schnellaufenden Wellen hier kein Anheben beziehungsweise Aufschwimmen des Dichtflächertbereiches erfolgt, sondern gar durch die sonst nicht übliche, hier jedoch gegebene, Druckbeaufschlagung der Wellendichtung ein wesentliches Anpressen des Dichtflächenbereiches der Dichtung an die Welle erfolgt. Sind dann kapillaraktive Freiräume vorhanden, werden diese bei Druckbeaufschlagung eliminiert, der Kontaktflächenbereich von Dichtung und Welle nimmt erheblich zu, wodurch sich die Schmierung in diesem Bereich verschlechtert, die beabsichtigte Schleppströmung nicht mehr ausbilden kann und sich somit Reibung, Verschleiß und Geräusch vergrößern.

Ausgehend von diesem Stand der Technik liegt der vorliegenden Erfindung die **Aufgabe** zugrunde, eine Wellendichtung der gattungsgemäßen Art dahingehend zu verbessern, daß eine verbesserte Schmierung der Dichtfläche zur Reduzierung von Reibmomenten, Geräuschen und/oder Stick-Slip-Phänomenen ermöglicht wird.

In Bezug auf die Wellendichtung selbst wird zur technischen **Lösung** der oben genannten Aufgabe vorgeschlagen, daß die an das Dichtkantenprofil angrenzenden zylindrischen Bereiche der Wellendichtung vom Innendurchmesser des Dichtkantenprofils aus gesehen wenigstens teilweise derart beabstandet ausgearbeitet sind, daß eine Kontaktierung dieser Bereiche mit der Welle bei Druckbeaufschlagung ausgeschlossen ist.

Durch diese technische Lösung wird bewirkt, daß das an abzudichtenden Wellen haftende viskose Lenkgetriebeöl von der jeweiligen Welle unter die sich in axialer Richtung ausdehnenden Dichtflächenbereiche geschleppt wird, wodurch die Schmierung zwangsläufig verbessert wird und somit die von der Dichtung verursachte Reibung und/oder Stick-Slip-Erscheinungen reduziert bzw. vermindert werden. Automatisch findet somit auch eine Geräuschreduzierung statt.

In vorteilhafter Weise werden die gesamten benachbarten Bereiche vollständig vertieft, so daß kapillarwirksame Bereiche vollständig vermieden werden. Dabei wird jedoch die Höhe des Dichtkantenprofils nicht vergrößert, was das Dichtkantenprofil unnötig schwächen würde. Die Vertiefungen können beispielsweise sphärisch ausgebildet sein.

Die Erfindung ermöglicht ein Dichtkantenprofil mit über den gesamten Umfang gleichbleibenden beidseitigen Prafliwinkein, die nicht zwangsläufig symmetrisch sein müssen und darüber hinaus das Auftreten kapillarwirksamer Bereiche vermeiden oder zumindest ihre negativen Auswirkungen abschwächen. Aufgrund der in Lenkventilen herrschenden Drücken bewirken kapillarwirksame Bereiche bei Druckbeaufschlagung ein Herandrücken der neben dem Dichtkantenprofil liegenden Bereiche an die Welle, was die Reibung und den Verschleiß erhöht. Durch die Ausbildung der Abstände werden die Druckwirkungen hier vermindert, so daß die erfindungsgemäße Dichtung sehr gute Standzeiten erzielt und darüber hinaus eine gute Schmierung gewährleistet.

Die Herstellung der Dichtung ist wirtschaftlich und wirksam. Bei der Herstellungsform kann zunächst eine zylindrische Basisfläche einfach ausgebildet werden. In dieser kann dann in üblicher bekannter Weise das Dichtkantenprofil ausgearbeitet werden. Die neben dem Dichtkantenprofil verbleibenden zylindrischen Flächen müssen dann weiterhin so ausgearbeitet werden, daß der Abstand der zylindrischen Bereiche wenigstens teilweise in Bezug auf den Dichtungsmittelpunkt größer wird. Der Bezug auf den Dichtungsmittelpunkt entspricht auch dem Bezug auf den Umfang des Dichtungsprofils. Die genannte Ausarbeitung kann beispielsweise durch Zusätzlichen Materialauftrag erfolgen. Auch können diese Bereiche von vornherein bei der Ausbildung der zylindrischen Fläche verbieiben. Durch die erfindungsgemäße Herstellungsweise wird vermieden, daß durch Druckbeaufschlagung die neben dem Dichtkantenprofil liegenden zylindrischen Bereiche an die Welle herangedrückt werden.

Gemäß einem besonders vorteilhaften Vorschlag der Erfindung werden in den benachbarten Bereichen axial verlaufende Kerben bis in den Randbereich ausgearbeitet.

Dieser Schleppmechanismus ist besonders vorteilhaft, wenn gemäß einem Vorschlag der Erfindung das Dichtkantenprofil eine in Axialrichtung wellenförmige Kontur aufweist.

Mit Vorteil wird weiterhin vorgeschlagen, daß in den benachbarten Bereichen im wesentlichen axial verlaufende Kerben ausgearbeitet sind. Mit besonderem Vorteil wird vorgeschlagen, daß die benachbarten Bereiche ausgehöhlt sind, vorzugsweise sphärisch, ohne daß die Höhe des Dichtkantenprofils dadurch vergrößert wird.

Weiterhin vorteilhaft sind Einbuchtungen in radialer Richtung im Dichtkantenprofil. Derartige Einbuchtungen begünstigen eine Schleppströmung in den Dichtflächenspalt und somit die Schmierung. Mit besonderem Vorteil wird vorgeschlagen, daß die Wellendichtung in Radialrichtung wellenförmig ausgebildet ist.

Mit der Erfindung wird vorgeschlagen, daß am Dichtringbereich mehrere Dichtkantenprofile angeordnet sind. Diese können parallel oder in bezug auf die Wellenform alternierend angeordnet sein, so daß jeweils anders gerichtete Wellen nebeneinander liegen.

Mit der Erfindung wird eine einfach und wirtschaftlich herstellbare Wellendichtung bereitgestellt, die insbesondere zur Geräuschreduzierung und zur Verbesserung der Schmierung beim Einsatz in Lenkgetrieben geeignet ist. Die erfindungsgemäße Wellendichtung kann eingesetzt werden, ohne den axialen Bauraum eines gattungsgegemäßen Drehschieberventils zu vergrößern.

Mit Vorteil wird vorgeschlagen, daß an dem Dichtungsbereich ein Schmutzlippenprofil angeordnet ist. Die Anordnung der Schmutzlippenprofile erfolgt vorzugsweise atmosphärenseitig neben den Dichtkantenprofilen. Zwischen dem Schmutzlippenprofil und einem Dichtkantenprofil kann Fett eingebracht werden. Dieses ist von besonderem Vorteil, weil aufgrund der Dichtkantenkonturierung das Fett zur Schmierung in den Dichtflächenbereich eingeschleppt werden kann.

Mit besonderem Vorteil stellt die Erfindung somit ein neuartiges Drehschieberventil mit einer guten Wellendichtungsschmierung bereit.

Weitere Vorteile und Merkmale der Erfindung ergeben sich aus der folgenden Beschreibung anhand der Figuren. Dabei zeigen:

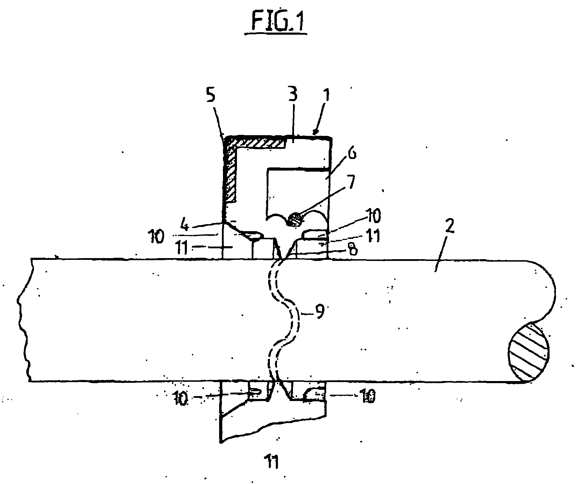

- Figur 1: eine schematische Darstellung eines Ausführungsbeispiels der Erfindung.

Figur 1 zeigt eine Wellendichtung 1 in einer schematischen, teilgeschnittenen Anordnung. Die Wellendichtung 1 besteht aus einem Dichtringbereich 3, einer verstärkenden Einlage 5, einer Dichtlippe. 4 mit Dichtkantenprofil 8 auf dem zylindrischen Bereich 11 und Spannring 7.

Das Dichtkantenprofil 8 ist in axialer Richtung wellenförmig ausgebildet. Die Wellen 9 bewirken somit, daß sich schmierseitig in den Wellenbuchten Schmiermittel sammelt, welches in den Dichtungsspalt aufgrund der Drehbewegung der Welle 2 geschleppt wird.

Mit Bezugszeichen 10 sind die in den benachbarten Bereichen ausgebildeten Vertiefungen bezeichnet. Durch die erfindungsgemäße Herstellung entstehen neben dem mit zu Darstellungszwecken überzeichnete Höhe dargestellten Dichtkantenprofil 8 flache benachbarte Bereiche, deren kapillare Wirksamkeit durch das Einbringen der Vertiefungen 10 gebrochen wird.

### Bezugszeichenliste:

- 1: Wellendichtung
- 2: Welle
- 3: Dichtringbereich
- 4: Dichtlippe
- 5: Verstärkung
- 6: Nut
- 7: Spannring
- 8: Dichtkantenprofil
- 9: wellenförmige Kontur
- 10: Vertiefungen
- 11: zylindrischer Bereich

## Patentansprüche

1. Wellendichtung, insbesondere für eine Welle (2) eines hydraulischen Lenkventils, mit einem eine abzudichtende Welle (2) umgebenden Dichtringbereich (3), wenigstens einem wellenseitig daran angeordneten Dichtkantenprofil (8) zum dichtenden Kontaktieren der Welle (2) im Bereich einer eine radiale und in Bezug auf eine Längsmittelachse der Welle (2) querliegende Ebene definierenden ringförmigen Dichtlinie und angrenzend am Dichtkantenprofil verbleibenden benachbarten zylindrischen Bereichen (11), wobei das Dichtkantenprofil (8) eine die ringförmige Dichtlinie mehrfach schneidende Kontur hat und über den gesamten Umfang beidseitig gleichbleibende Winkel aufweist, **dadurch gekennzeichnet, daß** die an das Dichtkantenprofil (8) angrenzenden zylindrischen Bereiche (11) der Wellendichtung (1) vom Innendurchmesser des Dichtkantenprofils (8) aus gesehen wenigstens teilweise derart beabstandet ausgearbeitet sind, daß eine Kontaktierung dieser Bereiche (11) mit der Welle (2) bei Druckbeaufschlagung ausgeschlossen ist.

2. Wellendichtung nach Anspruch 1, **dadurch gekennzeichnet, daß** die zylindrischen Bereiche (11) vollständig ausgehöhlt sind.

3. Wellendichtung nach Anspruch 1, **dadurch gekennzeichnet, daß** in den zylindrischen Bereichen (11) kerbenförmige Vertiefungen (10) ausgebildet sind.

4. Wellendichtung nach einem der Ansprüche 1 bis 3, **dadurch gekennzeichnet, daß** das Dichtkantenprofil (8) eine in Axialrichtung wellenförmig verlaufende Kontur (9) hat.

5. Wellendichtung nach einem der vorhergehenden Ansprüche, **dadurch gekennzeichnet, daß** das Dichtkantenprofil (8) in radialer Richtung Einbuchtungen aufweist.

6. Wellendichtung nach Anspruch 5, **dadurch gekennzeichnet, daß** das Dichtkantenprofil (8) in Radialrichtung eine wellenförmige Kontur aufweist.

7. Wellendichtung nach einem der vorhergehenden Ansprüche, **dadurch gekennzeichnet, daß** an dem Dichtringbereich (3) mehrere Dichtkantenprofile (8) angeordnet sind.

8. Wellendichtung nach Anspruch 7, **dadurch gekennzeichnet, daß** wenigstens zwei Dichtkantenprofile (8) zueinander parallel angeordnet sind.

9. Wellendichtung nach Anspruch 7, **dadurch gekennzeichnet, daß** wenigstens zwei Dichtkantenprofile (8) mit zueinander entgegenlaufenden Konturen angeordnet sind.

10. Wellendichtung nach einem der vorhergehenden Ansprüche, **dadurch gekennzeichnet, daß** an dem Dichtringbereich auf der Atmosphärenseite des Dichtkantenprofils (8) ein Schmutzlippenprofil angeordnet ist.

11. Wellendichtung nach Anspruch 10, **dadurch gekennzeichnet, daß** zwischen dem Schmutzlippenprofil und dem Dichtkantenprofil (8) Schmierfett eingebracht ist.

## Revendications

1. Joint d'arbre, en particulier pour un arbre (2) d'une soupape de direction hydraulique, avec une zone de joint (3) entourant un arbre (2) à rendre étanche, et au moins un profilé de bord d'étanchéité (8) situé du côté de l'arbre de la dite zone de joint, pour venir en contact d'étanchéité avec l'arbre (2) au niveau d'une ligne d'étanchéité annulaire définissant un plan radial transversal par rapport à un axe longitudinal médian de l'arbre (2) et des zones cylindriques (11) restantes contiguës au profilé de bord d'étanchéité, dans lequel le profilé de bord d'étanchéité (8) a un contour recoupant plusieurs fois la ligne d'étanchéité annulaire et forme des angles constants des deux côtés sur toute la circonférence, **caractérisé en ce que** les zones cylindriques (11) contiguës au profilé de bord d'étanchéité (8) du joint d'arbre (1) sont formées de manière que, vues depuis le diamètre intérieur du profilé de bord d'étanchéité (8), elles soient au moins partiellement à une distance telle qu'un contact entre ces zones (11) et l'arbre (2) soit exclu lors de l'application d'une pression.

2. Joint d'arbre selon la revendication 1, **caractérisé en ce que** les zones cylindriques (11) sont entièrement évidées.

3. Joint d'arbre selon la revendication 1, **caractérisé en ce que** des renfoncements (10) en forme d'encoches sont formés dans les zones cylindriques (11).

4. Joint d'arbre selon l'une quelconque des revendications 1 à 3, **caractérisé en ce que** le profilé de bord d'étanchéité (8) a un contour (9) ondulé dans le sens axial.

5. Joint d'arbre selon l'une quelconque des revendications précédentes, **caractérisé en ce que** le profilé de bord d'étanchéité (8) présente des creux dans le sens radial.

6. Joint d'arbre selon la revendication 5, **caractérisé en ce que** le profilé de bord d'étanchéité (8) présente un contour ondulé dans le sens radial.

7. Joint d'arbre selon l'une quelconque des revendications précédentes, **caractérisé en ce que** plusieurs profilés de bord d'étanchéité (8) sont disposés dans la zone de joint (3).

8. Joint d'arbre selon la revendication 7, **caractérisé en ce qu'**au moins deux profilés de bord d'étanchéité (8) sont disposés parallèlement l'un à l'autre.

9. Joint d'arbre selon la revendication 7, **caractérisé en ce qu'**il est prévu au moins deux profilés de bord d'étanchéité (8) ayant des contours orientés l'un vers l'autre.

10. Joint d'arbre selon l'une quelconque des revendications précédentes, **caractérisé en ce qu'**un profilé à lèvre anti-poussière est prévu sur la zone de joint du côté atmosphérique du profilé de bord d'étanchéité (8).

11. Joint d'arbre selon la revendication 10, **caractérisé en ce qu'**une graisse de lubrification est introduite entre le profilé à lèvre anti-poussière et le profilé de bord d'étanchéité (8).

## Claims

1. A shaft seal, particularly for a shaft (2) of a hydraulic control valve, including a sealing ring region (3) surrounding a shaft (2) to be sealed, at least one sealing edge profile (8) arranged thereon on the shaft side for sealingly contacting the shaft (2) in the vicinity of a sealing line, which annularly defines a plane extending radially and, with respect to a central longitudinal axis of the shaft (20), transversely and remaining adjacent cylindrical regions (11) adjoining the sealing edge profile, the sealing edge profile (8) having a contour which intersects the annular sealing a number of times and has angles remaining constant on both sides over the entire periphery, **characterised in that** the cylindrical regions (11) of the shaft seal (1) adjacent the sealing edge profile (8) are formed so as to be at least partially spaced apart, seen from the internal diameter of the sealing profile (8), such that contact of these regions (11) with the shaft (2) under the application of pressure is prevented.

2. A shaft seal as claimed in Claim 1, **characterised in that** the cylindrical regions (11) are completely hollowed out.

3. A shaft seal as claimed in Claim 1, **characterised in that** notch-shaped recesses (10) are formed in the cylindrical regions (11).

4. A shaft seal as claimed in one of Claims 1 to 3, **characterised in that** the sealing edge profile (8) has a contour (9) which is of wave shape in the axial direction.

5. A shaft seal as claimed in one of the preceding claims, **characterised in that** the sealing edge profile (8) has indentations in the radial direction.

6. A shaft seal as claimed in Claim 5, **characterised in that** the sealing edge profile (8) has a wave-shaped contour in the radial direction.

7. A shaft seal as claimed in one of the preceding claims, **characterised in that** a plurality of sealing edge profiles (8) are arranged on the sealing ring region (3).

8. A shaft seal as claimed in Claim 7, **characterised in that** at least two sealing edge profiles (8) are arranged parallel to one another.

9. A shaft seal as claimed in Claim 7, **characterised in that** at least two sealing edge profiles (8) are arranged with contours which extend towards one another.

10. A shaft seal as claimed in one of the preceding claims, **characterised in that** a dirt lip profile is arranged on the sealing ring region on the atmosphere side of the sealing edge profile (8).

11. A shaft seal as claimed in Claim 10, **characterised in that** lubricating grease is introduced between the dirt lip profile and the sealing edge profile (8).
